# EUROPEAN PATENT SPECIFICATION

(11) **EP 3 774 511 B1**
(45) Date of publication and mention of the grant of the patent: **20.12.2023**
(21) Application number: 19775008.6
(22) Date of filing: 25.03.2019
(51) Int. Cl.: B62L 3/08, B62L 3/02, B60T 8/26, B60T 7/10, B60T 11/16

(54) **A BRAKING SYSTEM FOR A MOTOR VEHICLE**
BREMSSYSTEM FÜR EIN KRAFTFAHRZEUG
SYSTÈME DE FREINAGE POUR UN VÉHICULE À MOTEUR

(30) Priority: 26.03.2018 IN 201841011027
(43) Date of publication of application: 17.02.2021
(73) Proprietor: TVS Motor Company Limited, Chennai 600006 (IN)
(72) Inventor: MOHAN, Shanmugam, Chennai 600 006 (IN); DHEVARAJ, Selvam, Chennai 600 006 (IN); MATHEWS, Winney Kakkanattu, Chennai 600 006 (IN); KARANAM, Venkata Mangaraju, Chennai 600 006 (IN); BABU, Rengarajan, Chennai 600 006 (IN)
(74) Representative: Patentanwaltskanzlei Matschnig & Forsthuber OG
(86) International application number: PCT/IB2019/052381
(87) International publication number: WO 2019/186349

(56) References cited:
- EP-B1- 1 795 418
- EP-B1- 1 795 418
- WO-A1-2015/152837
- CN-U- 206 938 984
- CN-U- 206 938 984
- IT-A1- BZ20 110 017
- JP-A- 2018 024 266

## Description

### TECHNICAL FIELD

The present subject matter, in general, relates to a braking system for motor vehicle, and in particular relates the braking system capable of actuating at least two wheel brakes upon actuation of a single brake.

### BACKGROUND

Motor vehicles are one of the important modes of transportation. In the last few decades, two-wheeler automobile industry has shown a remarkable growth and development, gaining popularity as personal transport, in terms of technology as well as sales. Due to consistent advancement in technology, motor vehicles, such as motorcycles, scooters, light-weight scooters, trikes etc. that have a saddle-ride type profile, have succeeded in maintaining their popularity among different sections of society. Different sections of society, based on their requirement, utilize the aforementioned motor vehicles for various purposes, such as a recreational activity, a means of transportation, and for sports activities. As a result, it becomes pertinent for the two-wheeler automobile industry to constantly develop and improve the design of components of the two-wheeled vehicles to suit requirements of different riders.

Generally, considering two-wheeled vehicles, they are provided with a pair of brakes disposed on the wheels. Typically, mechanically operated drum brakes are used in the vehicle. With the advent of braking technology, hydraulically or mechanically operated drum brakes and disc brakes have gained popularity. In some applications disc brake is installed on front wheel(s) and in some other application, the disc brake is installed on both front and rear wheels. Typically, determination of whether to use two disc brakes or one disc brake is primarily based on the capacity of the vehicle and the maximum load vehicle. Generally, for lesser capacity vehicles that are not expected to reach very high speed levels, a single disc brake is provided, preferably, on to the front wheel of the vehicle. Additional consideration of providing one disc brake on the front side is to maximise the braking effect by taking the advantage of the dynamic load transfer effect of a vehicle during braking condition.

In accordance with the aforementioned ideology, various types of braking systems have been developed for facilitating braking functionalities in the saddle type vehicle e.g. two-wheelers. Conventionally, braking systems that allow simultaneous actuation of a front brake and a rear brake upon application of a single brake lever have gained widespread popularity across the globe. Such, simultaneous actuation of the front wheel brake and the rear wheel brake is performed by a braking system.

### BRIEF DESCRIPTION OF THE DRAWINGS

The detailed description is described with reference to the accompanying figures. The same numbers are used throughout the drawings to reference like features and components.
Fig. 1 (a) depicts an exemplary two-wheeled vehicle with selective parts, in accordance with an embodiment of the present subject matter.
Fig. 1 (b) illustrates a schematic layout of the braking system of the two-wheeled motor vehicle 100, in accordance with the embodiment as depicted in Fig. 1 (a).
Fig. 2 (a) illustrates a top view of the braking system, in accordance with the embodiment of Fig. 1 (b).
Fig. 2 (b) depicts an exploded view of the braking system depicted in Fig. 2 (a), in accordance with the embodiment of Fig. 2 (a).
Fig. 3 (a) depicts a rear perspective view of the first brake lever, in accordance with the embodiment of Fig. 2 (a).
Fig. 3 (b) depicts a front perspective view of the first brake lever, in accordance with the embodiment of Fig. 2 (a).
Fig. 4 (a) depicts an isometric view of the secondary lever, in accordance with the embodiment of Fig. 2 (a).
Fig. 4 (b) depicts another isometric view of the secondary lever, in accordance with the embodiment as depicted in Fig. 4 (a).
Fig. 5 (a) depicts a bottom perspective view of the braking system, in accordance with the embodiment as depicted in Fig. 2 (a).
Fig. 5 (b) depicts a cross-sectional top view of the braking system, in accordance with the embodiment of Fig. 2 (a).
Fig. 5 (c) depicts the cross-sectional top view of the braking system in a brake actuated condition, in accordance with the embodiment of Fig. 5 (b).

### DETAILED DESCRIPTION

Conventionally, motor vehicles are provided with a braking system for mainly slowing down or stopping the motion of the vehicle. The braking system, usually, includes at least one brake assembly, such as a front wheel brake assembly and a rear wheel brake assembly for a front wheel and a rear wheel, respectively. Further, each of the front wheel brake assembly and the rear wheel brake assembly is connected to a brake lever for actuation. The brake lever can be connected to the brake assembly in a variety of ways. For example, the brake lever can be connected to the brake assembly by means of a control cable. In such a case, one end of the control cable may be secured to the brake assembly, and the other end of the cable may be secured to the brake lever. This is typically used in drum brake systems. In another case, the brake lever can be connected to the brake assembly through a hydraulic means. This is generally applicable for disc brake systems. However, a combination of the cable and hose can also be used. Further, link or rod can be used for connecting brake lever or to the brake assembly. Consequently, actuation of the brake lever may result in actuation of the brake assembly and subsequently, the brake may be applied.

Generally, the front wheel and the rear wheel are provided with separate braking systems. Conventional two-wheeler and three wheeler braking systems usually include either completely hand-operated brakes for both the wheels or include a combination of hand-operated and foot-operated brakes. In the latter case, generally, the front wheel brakes are hand-operated, and include a front brake lever mounted on a handle of the two-wheeled vehicle for actuation, whereas the rear wheel brakes can be foot-operated, or sometimes hand operated according to the type of the vehicle.

Usually, during operation of the brakes, riders apply the rear wheel brake alone. Such a practice stems from the fact that actuating both the brake levers at the same time may be inconvenient for the rider or arising out of a sudden involuntary reaction in case of need of emergency stop for safety. In addition, when the front wheel brake is applied, sudden weight transfer towards the front wheel causes the front wheel to brake rapidly, and may result in a sudden jerk to the vehicle. The sudden jerk may affect the ride quality and may disturb the balance and stability of the vehicle leading to an accident. However, on the other hand, the braking force applied to rear wheel brake has to be limited to prevent skidding of the vehicle. As a result, the deceleration experienced by the vehicle may also be limited and subsequently, the stopping distance of the vehicle may be significantly long.

Conventionally, in order to address the above-mentioned concerns, braking systems that allow simultaneous actuation of a front wheel brake and a rear wheel brake by application of a single brake lever have been developed. Accordingly, upon actuation of the single brake lever, such a braking system may allow distribution of braking force to the front wheel as well as the rear wheel of the vehicle. In addition to being convenient for the rider, such braking systems may ensure that the deceleration of the vehicle can be increased and subsequently, the stopping distance may be reduced. Further, as would be understood, in two-wheeled vehicles with such braking systems, a front brake lever may also be provided to independently operate the front wheel brake.

Further, in such braking systems with front wheel brake assembly being a disc brake type, a hydraulic fluid dispensing member is mounted in the vicinity of the front brake lever for actuating a hydraulically operated disc brake by the front brake lever. This enables the front brake lever to actuate the hydraulic fluid dispensing member for dispensing requisite amount of hydraulic fluid whenever front wheel brake is applied. Also, another fluid dispensing member is mounted in the vicinity of the rear brake lever to actuate the front wheel brake when the rear wheel brake is actuated. Accommodation of two fluid dispensing members populates the handlebar assembly, particularly in two-wheeled vehicle, which is typically having multiple system like the head lamp assembly, switch assembly, brake and electrical cable etc. that are mounted or routed thereof. Such a braking system is not preferred.

Moreover, there exists another type of brake assembly, in which a single fluid dispensing member is used with either multiple pistons or with a single piston actuated for actuation by different levers. This single fluid dispensing member is disposed on one side of the handlebar assembly. The fluid dispending member may include an assembly for mounting to the handlebar and the assembly also supports levers that actuate the fluid dispensing member. Such type of brake assembly includes a lever, similar to a third order lever, with the effort application point being in the middle of the lever. Generally, there is a need for providing higher braking force through the lever that could provide a lever ratio close to 1 to overcome poor braking performance, inadequate braking response, and hard-lever feel. EP 1 795 418 B1, IT BZ20 110 017 A1, CN 206 938 984 U and JP 2018 024266 A disclose breaking systems of prior art.

Thus, in case of certain braking systems, more than one brake lever is used in the braking system. For example, some braking systems include an intermediate lever, which helps in transfer of braking forces from a lever that is directly actuated by the user. In such circumstances, brake lever and/or the intermediate lever should return to their initial condition once the brake is released. This is essential safety and comfort requirement as the lever when not returned to release condition or state would make the user uncomfortable because of the inconsistent action. Further, the lever action may feel inconsistent due to change in travel, in some cases the little travel, causing the user to apply the brake without a predetermined estimation. Moreover, the user has to push the brake to their rest position, which is hectic process. Generally presence of multiple levers requires usage of multiple springs that help in returning of brake lever to the resting position. Also, the multiple levers may include two or more levers that interact and function in conjunction with each other, which requires larger spring. Presence of multiple springs aggravates the aforementioned scenario due to movement of multiple levers. Moreover, assembly of multiple springs is time taking and each spring is to be provided with a specific preload. Also, provision of multiple springs on the handlebar of the vehicle that is already tightly packed area further eats away space as the conventional springs either require substantial axial length or occupy certain space in case of torsional springs. This is undesired especially in cases of vehicles that have a compact handlebar and headlamp assembly and other parts mounted to the handlebar.

Moreover, using such multiple levers that can operate independently provide the option of simultaneous actuation of brake levers exerting excessive braking force on a single wheel brake. This would result in premature skidding of that particular wheel because of the unpredictable road condition like slippery or wet roads that offer low friction and preloaded wheel by braking. Moreover, the user is prone to apply both the brakes during panic conditions which eventually would result in application of excessive braking forces as in conventional vehicles. Conventionally, a delay mechanism is used in some braking system to address the aforementioned shortcomings. However, the conventional delay mechanism requires use of additional parts that further occupies space on the handlebar or in the vicinity of the handlebar of the vehicle. These additional parts require additional cost, assembly time, and extra care for maintenance.

Thus, there is a need for braking system that addresses the aforementioned and other short comings in the prior art. The braking system as explained will provide a compact brake assembly with reduced number of parts Also, the present subject matter will be capable of providing improved braking performance and braking feel with enhanced safety.

The present subj ect matter provides a braking system for a motor vehicle. The braking system includes at least one front wheel brake capable of applying braking forces to at least one front wheel and at least one rear wheel brake capable of applying braking forces to at least one rear wheel of the motor vehicle. The motor vehicle includes a two brake levers disposed in proximity to each other. A first brake lever of the two brake levers is rotatable about a first pivot point and a second brake lever of the two brake levers is rotatable about a second pivot point in a second direction of rotation. In one embodiment, the second direction of rotation is substantially opposite to a direction of rotation of the first brake lever. The levers can be a lever directly actuated by the user or an intermediate lever that is not actuated upon actuation of a lever directly actuated by the user.

A single elastic member is operably coupled to the first brake lever and to said second brake lever. The single elastic member is capable of providing a return force upon actuation of the first brake lever and the second brake lever. It is an advantage that the single elastic member provides the desired return force to both the levers.

In one embodiment, the first brake lever is an independent brake lever and the second brake lever is a secondary lever that are capable of actuating a fluid dispensing member for application of at least one wheel brake therethrough. The term 'secondary lever' and 'second brake lever' are interchangeably used. The secondary lever is connected to a synchronous brake lever or synchronous brake pedal that is connected to the secondary lever whereby actuation of the synchronous brake lever actuates more than one wheel brake.

It is a feature that in one embodiment, the first brake lever and the secondary lever are capable of actuating an actuation member, of the fluid dispensing member, independent of each other. Thus, it is an advantage that interdependency of levers for actuation by abutment is avoided. However, the present subject matter is applicable to braking system having actuation of one brake lever through another brake lever through abutment, reaction force, or force distribution.

It is another feature that the single elastic member is operably coupled and is securely connected to or supported by the first brake lever and the secondary lever through a first dynamic abutment point and a second dynamic abutment point, respectively. It is a feature that the dynamic abutment points are movable varying the force exerted by the elastic member beyond a static pre-load.

It is a feature that the dynamic abutment points are made of rigid material and are preferably integrally formed with the levers. It provides the advantage of ease of assembly and material handling as the number of parts is reduced.

In one embodiment, the first dynamic abutment point is disposed in proximity to a first pivot point, a point of rotation, of the first brake lever. Thus, the first dynamic abutment point is disposed away from an extended portion of the first brake lever at which the user holds thereby not interfering with aesthetics and user of the first brake lever.

In one embodiment, the secondary lever includes the second dynamic abutment point that is a cylindrical pin provided at a substantial mid-portion (along vertical length/height) of the secondary lever, which enables uniform application of return force especially in case of longer secondary levers. A support wall is provided orthogonal to the second dynamic abutment point supporting the second dynamic abutment point thereby providing structural rigidity to withstand force from the elastic member.

It is a feature that the elastic member acting as an integrated elastic member offers pre-load to both the brake levers. During actuation of any one or both the brake levers the respective lever is rotated thereby changing the position of the respective dynamic abutment point. This compresses the elastic member that stores the energy in the form of potential energy. Additional force is exerted by the elastic member due to this attained energy. The additional force is exerted on the other lever and the user has to overcome this additional force/energy that provides an increase in delay time or resistance against the application of excessive braking force on the wheel brake. Thus, it is an advantage that the present subject matter provides delay without the need for any additional delay mechanism.

Further feature being, the braking system accommodates the elastic member more compactly. This provides the advantage of more compact packaging without any fouling or interference with neighboring parts/components. For example, the braking system is compactly mountable on the handlebar without interfering with the head lamp assembly or the head lamp cowling. Further advantage being, the braking system is adaptable to all models irrespective of the layout.

The present subject matter is not limited to two-wheeled vehicle. As the present subject matter in essence is applicable to a motor vehicle with one or more front wheels and one or more rear wheels. Therefore, the motor vehicles include a scooter type vehicle, a motorcycle type vehicle, a trike, or an auto-rickshaw.

These and other advantages of the present subject matter would be described in greater detail in conjunction with the figures in the following description.

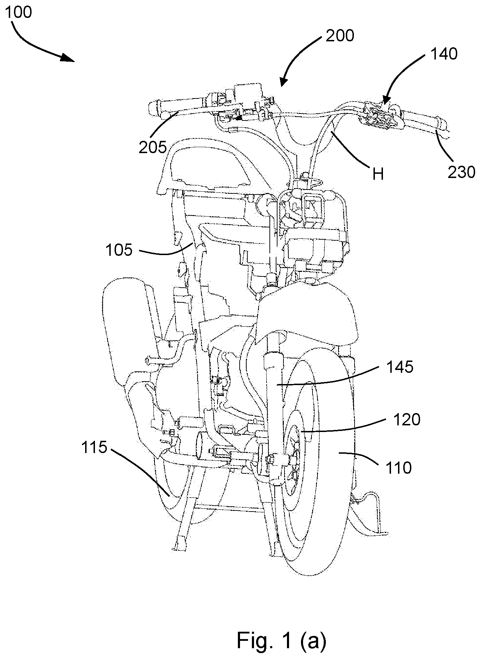

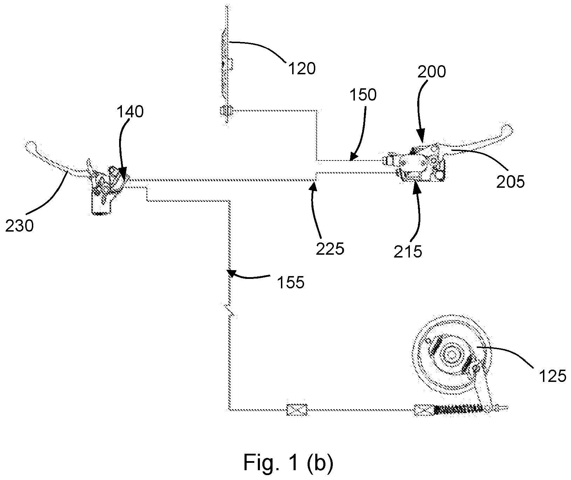

Fig. 1 (a) depicts an exemplary two-wheeled motor vehicle 100 with selective parts, in accordance with an embodiment of the present subject matter. The motor vehicle 100 includes a frame assembly 105 supporting a front wheel 110 and a rear wheel 115. The front wheel 110 and the rear wheel 115 are rotatably supported by front suspension system 145 and the rear suspension system (not shown), respectively. In one embodiment, the rear wheel 115 is additionally supported by a swingarm (not shown). The front wheel 110 is provided with a front wheel brake 120 and the rear wheel 115 is provided with a rear wheel brake 125 (shown in Fig. 1 (b)). The terms front wheel and the front wheel brake are not limiting and includes more than one front wheel or more than one front wheel brake as and where applicable. Similarly, the terms rear wheel and the rear wheel brake are not limiting and includes more than one rear wheel or more than one rear wheel brake as and where applicable. In the present embodiment, the front wheel brake 120 is a hydraulically operated disc brake 120 that includes a disc that is concentrically connected to the wheel and a caliper assembly that is functionally connected to the disc. The braking system 200 includes a synchronous brake lever 230 of a rear brake assembly 140 for actuating both the front wheel brake 120 and the rear wheel brake 125. The first brake lever 205 of the braking system 200 is capable of actuating only the front wheel brake 120. In one implementation, the first brake lever 205 and the synchronous brake lever 230 may be disposed on one end and other end of a handlebar H of the motor vehicle 100. In a preferred implementation, the first brake lever 205 and the synchronous brake lever 230 are disposed on right-hand side and a left-hand side of the handlebar H, respectively. The handlebar H is considered a structural member of the motor vehicle 100. The handlebar H is functionally connected to the front wheel 110 through the front suspensions 145 and is rotatably supported by the frame assembly 105 for steering the motor vehicle 100. In another implementation (not shown), the first brake lever 205 may be used for applying the front wheel brake 120 jointly with the rear wheel brake 125, while other brake lever is used to independently apply the rear wheel brake 125.

The motor vehicle 100 includes a power unit (not shown) that is either an internal combustion engine, traction motor or both that is functionally connected to at least one wheel of the motor vehicle 100.

Fig. 1 (b) illustrates a schematic layout of an exemplary braking system for a motor vehicle 100, in accordance with the embodiment as depicted in Fig. 1 (a). The front wheel brake 120 is a hydraulically operated disc brake. Further, the first brake lever 205 may be a hand operated lever actuated to apply the front wheel brake 120. In the present implementation, the synchronous brake lever 230 is also a hand operated lever mounted to the handlebar H. In another implementation, instead of providing the synchronous brake lever 230 on the handlebar H, a foot pedal (not shown) pivoted to the frame assembly can serve as the brake lever to jointly apply braking forces on the front wheel brake 120 and the rear wheel brake 125.

Further, in the present embodiment, the rear brake assembly includes a distributor assembly 140 coupled with the rear brake lever 230. The distributor assembly 140 is connected to a hydraulic fluid dispensing member 215 of the braking system 200, disposed in proximity to the first brake lever 205, through a secondary cable 225. Further, the brake lever 230 is connected to the rear wheel brake 125 through a rear brake cable 155. As can be seen in the present embodiment, the braking system 200 includes only a single fluid dispensing member 215 functionally coupled to one of the brake lever(s). The first brake lever 205 is functionally connected to the front brake 120 through a front brake cable 150 to independently actuate the front wheel brake 120. The term `brake cable' used herein includes a brake hose capable of transferring hydraulic force, or a cable movable within a sheathed cover for transferring mechanical force, as and where applicable.

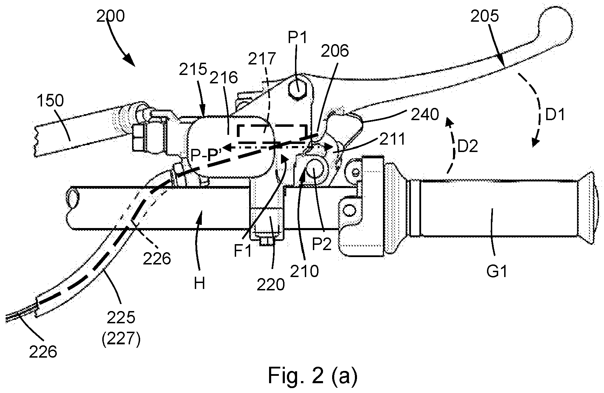

Further, the secondary cable 225 is functionally coupled to an actuation member (shown in Fig. 2 (a)) of the fluid dispensing member 215. For example, the fluid dispensing member 215 contains hydraulic brake fluid for actuation of one or more caliper(s) of the front wheel brake 120 and the actuation member is piston. In an embodiment, the actuation of the first brake lever 205 and/or the secondary cable 225 causes a corresponding actuation of the hydraulic fluid dispensing member 215 that transmits braking forces to the front wheel brake 120 through the front brake cable 150 that is connected to the front wheel brake 120. A single brake cable, which is the front brake cable 150, is connected to the front wheel 115 providing a simple and uncluttered routing for the braking system. In the depicted implementation, the front brake cable 150 is a hydraulic cable/hose, and the secondary cable 225 and the rear brake cable 155 are mechanical cables.

Fig. 2 (a) illustrates an enlarged top view of a portion the braking system 200, in accordance with the embodiment of Fig. 1 (b). In the present implementation, the braking system 200 is mounted to a handlebar H. The handlebar H includes a tubular type single member, a split type, or any other known type of handlebar. The hydraulic fluid dispensing member 215, which is a master cylinder 215, includes a reservoir 216 and an actuation member 217. The terms master cylinder and fluid dispensing member are interchangeably used, hereinafter. The master cylinder 215 is configured to store hydraulic brake fluid and the actuation member 217 is capable of moving along a piston axis P-P' to displace the brake fluid for engaging or disengaging the wheel brake.

The first brake lever 205 is hinged/ pivoted to the master cylinder 215 at a first pivot point P1 and the first brake lever 205 is capable of actuating the actuation member 217 during application of first brake lever 205. Further, the secondary lever 210 is mounted to the master cylinder 215 at a second pivot point P2. The master cylinder 215 is secured to the handlebar H through a holder member 220 is fastened to the master cylinder 215 so as to secure the braking system 200 to the handlebar H. In other words, the holder member 220 securely mounts the master cylinder 215 to the handlebar H by fastening. The holder member 220 together with the master cylinder 215 forms the master cylinder assembly.

The fluid dispensing member 215 is having a first face F1 towards one lateral side RH or LH. The first brake lever 205 and the secondary lever 210 secured to the fluid dispensing member 215 are disposed towards the first face F1 thereof. Further, the first brake lever 205 and the secondary lever 210 are disposed on either sides of the piston axis P-P' along which the actuation member 217 is movable. In the present embodiment, the first pivot point P1 of the first brake lever 205 is disposed ahead of the piston axis P-P' and the second pivot point P2 of the secondary lever 210 is disposed rearward of the piston axis P-P', when viewed from top.

The secondary cable 225 includes an inner cable 226 that is having one end connected to the secondary lever 210 and other end connected to the distribution assembly 140. Further, the secondary cable 225 includes an outer sheath 227 that supports the inner cable 226 slidably and the outer sheath 227 is secured between the distribution assembly 140 and the master cylinder 215, Therefore, during actuation of the first brake lever 205 in a first direction of rotation D1 towards the handle grip G1 disposed on one end portion in proximity to the master cylinder 215, it rotates about the pivot point P1 in a clockwise direction when viewed from the top. Similarly, the actuation of the synchronous brake lever 230, the secondary cable 225 gets pulled that results in rotation of the secondary lever 210 in a second direction of rotation D2 in an anti-clockwise direction, when viewed from top. The independent brake lever 205 includes a lever arm 206 that is capable of actuating the actuation member 217 during application of the independent brake lever 205. Correspondingly, the secondary lever 210 includes a secondary arm 211 that is capable of actuating the actuation member 217 during actuation of the synchronous brake lever 230 creates pulling of the secondary cable 225 causing pivotal motion of the secondary lever 210 thereby resulting in actuation of the master cylinder 215. A single elastic member 240 is provided linking the first brake lever 205 and the secondary lever 210 to provide a return force on both the levers 205 & 210, when any one or both the levers are actuated.

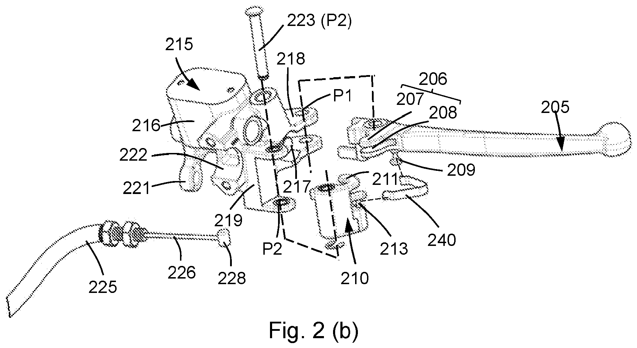

Fig. 2 (b) depicts an exploded view of the braking system, as depicted in Fig. 2 (a) in accordance with the embodiment of the present subject matter. The master cylinder 215 includes a first lever-support 218 that is capable of pivotally supporting the first brake lever 205. The first brake levers support 218 includes a first member, and a second member (collectively referred to as 218) that are spaced apart to accommodate a pivot portion of the first brake lever 205. The first lever-support 218 includes apertures that define the first pivot point P1. In a preferred implementation, the first lever-support 218 is disposed on a front facing side, ahead of the piston axis P-P', of the master cylinder 215. Further, the master cylinder 215 includes a second pivot support 219 formed by a third member, and a fourth member (collectively referred to as 219) spaced apart to accommodate the secondary lever 210. The second lever-support 219 includes apertures enabling the secondary lever 210 to pivot about the pivot point P2. A pin 223 rotatably supports the secondary lever 210 that is either riveted or secured using a circlip. The second lever-support 219 is disposed on other side of the piston axis P-P' extends in a lateral direction RH/LH without interfering with the handlebar H to which the master cylinder 215 is mounted. The gap between the third member 219-1 and the fourth member 219-2 is substantially greater than the gap between the first member 218-1 and the second member 218-2, whereby the second lever-support 219 is capable of supporting a secondary lever 210 whereby the secondary lever 210 that is substantially wider is accommodated thereat.

In the present embodiment, the actuation member 217 is having an actuation point disposed towards a first face F1 of the master cylinder 215 that is facing substantially a lateral side RH/LH. The orientation referred herein is with respect to the handlebar H in an orientation providing straight line movement of the vehicle. Further, the master cylinder 215 includes an abutment member 221 that supports the secondary cable 225 extending from the distribution assembly 140 towards the secondary lever 210. The abutment member 221 is disposed substantially away from the second lever-support 219 whereby substantial length of the inner cable 226 is supported between the abutment member 221 and the connecting portion 212 provided on the secondary lever 210. The inner cable 226 of the secondary cable 225 includes a cylindrical pin 228 that is functionally connected to the secondary lever 210 and the cylindrical pin 228 accommodates change in orientation of the secondary lever 210 during actuation of the synchronous brake lever 230. Further, the master cylinder 215 is provided with a mounting portion 222 that conforms and complements the handlebar H and enables mounting of the master cylinder 215 to the handlebar H through the holder member 220.

The first brake lever 205 and the secondary lever 210 are capable of actuating the actuation member 217 by means of the lever arm 206 and the secondary arm 211, respectively. The lever arm 206 extends from the first brake lever 205 towards the actuation member 217. In the present embodiment, the lever arm 206 includes a first sub-arm 207 and a second sub-arm 208 that are spaced in a direction substantially orthogonal/perpendicular to the planar region along which rotation of the first brake lever 205 happens. Similarly, the secondary arm 211 of the secondary lever 210 is extending towards the actuation member 217 and the secondary arm 211 is capable of moving at the gap formed between the first sub-arm 207 and the second sub-arm 208 whereby the levers 205 & 210 can move independent of each other without the need for abutting against one another thereby providing smooth operation of both the braking mechanism. Further, the single elastic member 240 acting as an integrated elastic member for the levers 205 & 210 is provided that enables retraction of the levers 205 and 210 to an original condition, in the released condition of the brake lever. In the present implementation, the elastic member 240 is a compression type spring and in a preferred implementation the elastic member 240 is a strip type or leaf type or plate type member. The elastic member 240 is compact part that is linked to the levers 205 & 210 by snug-fit at the first dynamic abutment point 209 and at the second dynamic abutment point 213. This provides easy assembly and ease of dismantling for service or for replacement.

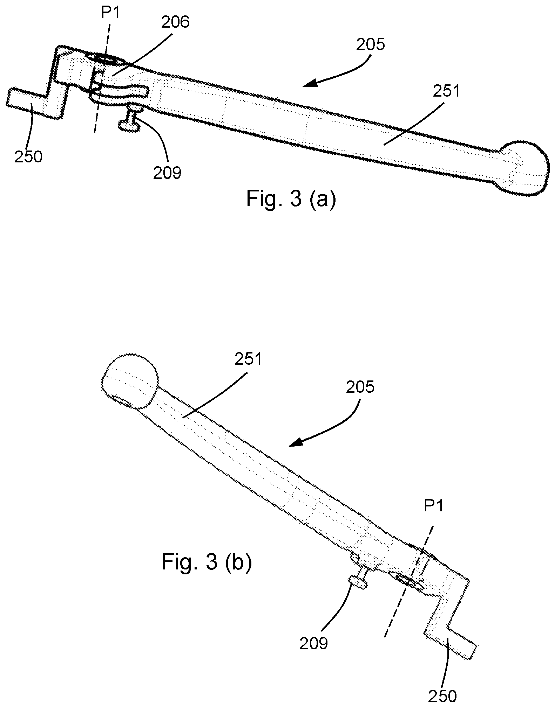

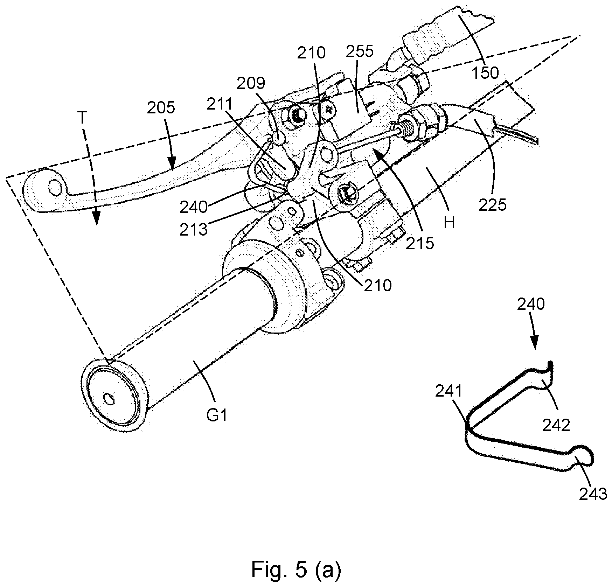

Fig. 3 (a) depicts a rear perspective view of the first brake lever, in accordance with the embodiment of Fig. 2 (a). Fig. 3 (b) depicts a front perspective view of the first brake lever. The first brake lever 205 includes an extended portion 251 to enable the user to hold/press and actuate the lever 205. Further, the first brake lever 205 includes a switch actuating portion 250 that actuates a brake switch 255 (shown in Fig. 5 (a)) when the user actuates the brake lever 205 so that the brake switch 255 will actuates a brake lamp (not shown) of the motor vehicle 100. The first brake lever 205 includes a first dynamic abutment point 209 that is a protruded member affixed to the first brake lever 205. In another embodiment, the first dynamic abutment point 209 is either a scooped portion or a protruded that is either detachably attached or is integrally disposed. The dynamic abutment point 209 is a cylindrical portion protruding outward from a surface of the first brake lever 205 and at a tip a stopper is provided having a diameter substantially greater than a diameter of the rest of the dynamic abutment point 209. The dynamic abutment point 209 is made of a rigid material like metal that is welded, encasted, affixed or the like to the first brake lever 205. The dynamic abutment point 209 is disposed in proximity to the first pivot point P1 of the first brake lever 205 about which it rotates. The first brake lever 205 actuates the actuation member 217 of the master cylinder 215 through the lever arm 206.

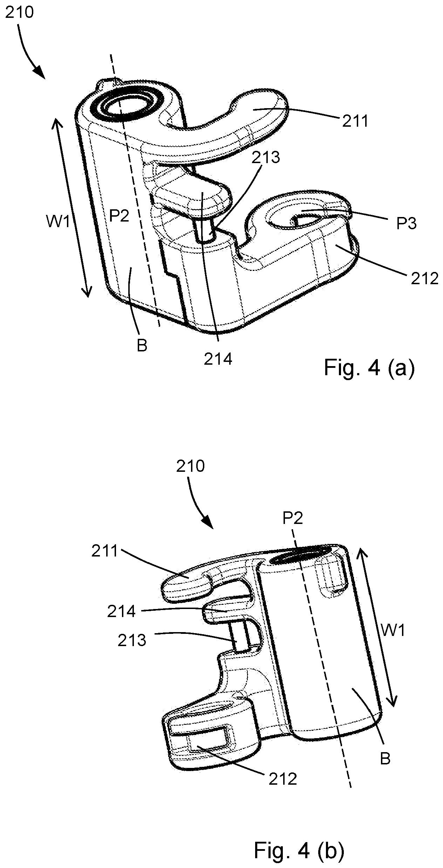

Fig. 4 (a) depicts an isometric view of the secondary lever, in accordance with the embodiment of Fig. 2 (a). Fig. 4 (b) depicts another isometric view of the secondary lever. The secondary lever 210 includes a width W1 that is substantially greater than the width of the first brake lever 205, defined by a body portion B of the secondary lever 210. The body portion B includes a metal insert that can be encasted, press-fitted or the like that enables free rotation of the secondary lever 210 about the pin 223. The secondary lever 210 includes a secondary arm 211 that enables actuation of the actuation member 217 of the master cylinder 215 during rotation of the secondary lever 210 about the pivot point/axis P2 in a second direction of rotation D2. In the present implementation, the secondary arm 211 is disposed at a top portion thereof and extending curvedly in a tear drop shape. However, the secondary arm 211 is capable of taking any regular or irregular shape depending on the application.

Further, the secondary lever 210 includes a connecting portion 212 for connecting the secondary cable 225 that is connected to the synchronous brake lever 230. The secondary cable 225 includes the cylindrical pin 228 that is pivotable about the connecting portion 212 to enable the cylindrical pin 228 to adjust to change in orientation of the secondary lever 210. The secondary lever 210 includes the second dynamic point 213 that is a cylindrical pin provided at a substantial mid-portion of the secondary lever 210. Further, the second dynamic point 213 is reinforced by a support wall 214 supporting the second dynamic pin for coupling the elastic member 240.

Fig. 5 (a) depicts a bottom perspective view of the braking system 200, in accordance with the embodiment of Fig. 2 (a). Also, Fig. 5 (a) depicts an enlarged view of the elastic member 240. The elastic member 240 is disposed at a downward portion of first brake lever 205 as the first dynamic abutment point 209 is provided on a downward face thereof. The secondary lever 210 having the width W1 substantially greater than the width of the first brake lever 205 has the second dynamic point 213 in line with the first dynamic point 209. The elastic member 240 linked between the first abutment point 209 and the second abutment point 213 is disposed in a travel planar region about which the levers 205 & 210 move. The elastic member 240 is compactly disposed at a triangular portion T defined by the first brake lever 205 and the handlebar H. The elastic member 240, as depicted, includes a first end 242 and a second end 243, each of the ends 242, 243 is provided with a dent/ deep-recess portion to enables the elastic member 240 to abut the respective dynamic abutment point 209, 213. The elastic member 240 is operably coupled to or supported by the movable or floating abutment points that are referred to as dynamic abutment points.

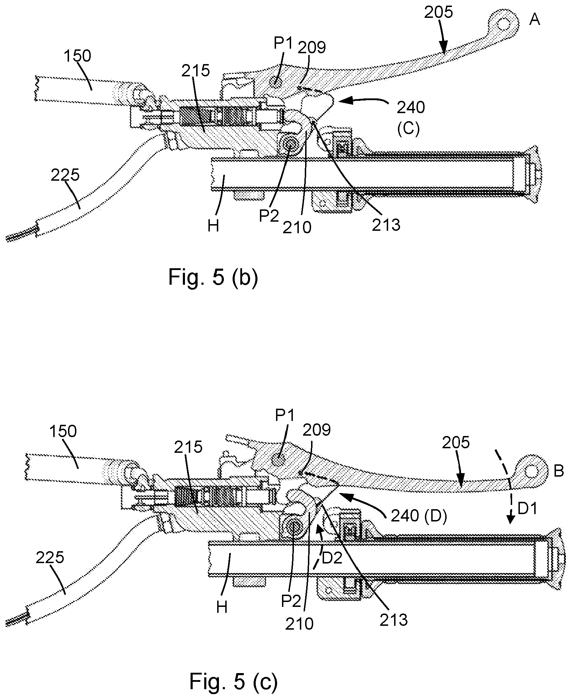

Fig. 5 (b) depicts a cross-sectional view of the braking system taken along a plane passing through handlebar H and master cylinder bore axis, in accordance with the embodiment as depicted in Fig. 2 (a). Fig. 5 (c) depicts another cross-sectional view of the braking system in a brake actuated condition. The elastic member 240 operably coupled to the first brake lever 205 and the secondary lever 210 offer a pre-load. In an un-actuated position A of the first brake lever 205, the elastic member 240 is having a first gap C between the ends 242 & 243 offering a pre-load. During application of the first brake lever 205 in a direction of rotation D 1, at a position B, the first dynamic abutment point 209 moved closer to the second dynamic abutment point 213 thereby resulting in compression of the elastic member 240 thereby forming a second gap D that is lesser than the first gap C. This adds additional force on both the levers 205 & 210. Thus, the dynamic position of the abutment points is achieved.

Similarly, when the rider actuates the synchronous brake lever 230, the secondary lever 210 is actuated whereby the secondary lever rotated in the second direction of rotation D2 whereby the position of the second dynamic abutment point is varied exerting additional force on the first brake lever 205. In such a condition if the user tries to actuate the first brake lever 205, a delay is caused due to the increase in force exerted by the elastic member 240. This provides enhanced safety, avoiding premature wheel skidding, while actuating both levers simultaneously. Thus, the increase in load offered by the elastic member beyond its preload by actuation of one of levers 205 & 210 followed by actuation of remaining lever. Thus, actuation state of one of the levers is sensed by the braking system 200 thereby offering the delay in front braking while actuating remaining lever.

Further, as depicted in Fig. 5 (a), the braking system 200 accommodates the elastic member 240 compactly in the braking system 200 whereby the elastic member 240 acts as an integrated elastic member offering return force to at least two levers. This provides the advantage of more compact packaging without any fouling or interference with neighboring parts/components. Further, the braking system is adaptable to all models of irrespective of the layout.

The braking system 200 described can be adapted to a vehicle with a pedal operated brake lever, wherein the essence of the present subject matter is adaptable to the braking system mounted at the pedal operated brake lever portion.

It is to be understood that the aspects of the embodiments are not necessarily limited to the features described herein. Many modifications and variations of the present subject matter are possible in the light of above disclosure. The invention is only limited within the scope of the appended claims.

### List of reference signs:

- 100: vehicle
- 105: frame assembly
- 110: front wheel
- 115: rear wheel
- 120: front wheel brake
- 125: rear wheel brake
- 140: rear brake assembly/ distributor assembly
- 145: front suspension
- 150: independent brake cable
- 155: rear brake cable
- 200: braking system
- 205: independent brake lever
- 206: lever arm
- 207: first sub-arm
- 208: second sub-arm
- 209: first dynamic abutment point
- 210: secondary lever/ second brake lever
- 211: secondary arm
- 212: connecting portion
- 213: second dynamic abutment point
- 214: support wall
- 215: fluid dispensing member/ master cylinder
- 216: reservoir
- 217: actuation member
- 218: first lever support
- 218-1: first member
- 218-2: second member
- 219: second pivot support/second lever support
- 219-1: third member
- 219-2: fourth member
- 220: holder member
- 221: abutment member
- 222: mounting portion
- 223: pin
- 225: secondary cable
- 226: inner cable
- 228: cylindrical pin
- 230: synchronous brake lever
- 233: pin
- 240: elastic member
- 242: first end
- 243: second end
- 250: switch actuating portion
- 251: extended portion
- 255: brake switch
- B: body portion
- D1: first direction of rotation
- D2: second direction of rotation
- F1: first face
- G1: handle grip
- H: handlebar
- P-P': piston axis
- P1: first pivot point
- P2: second pivot point
- W1: width

## Claims

1. A braking system (200) for a motor vehicle (100), said braking system (200) comprising:
at least one front wheel brake (120), said front wheel brake (120) being capable of applying braking forces to at least one front wheel (110) of said motor vehicle (100);
at least one rear wheel brake (125), said rear wheel brake (125) being capable of applying braking forces to at least one rear wheel (115) of said motor vehicle (100);
a first brake lever (205), said first brake lever (205) being rotatable about a first pivot point (Pl);
a second brake lever (210), said second brake lever (210) being rotatable about a second pivot point (P2); and
a single elastic member (240), said single elastic member (240) being operably coupled to said first brake lever (205) and to said second brake lever (210),
**characterized by**
said single elastic member (240) being capable of providing a return force upon actuation of said first brake lever (205) and said second brake lever (210), and
wherein said first brake lever (205) is rotatable about said first pivot point (Pl) in a first direction of rotation (Dl) and said second brake lever (210) is rotatable about said second pivot point (P2) in a second direction of rotation (D2), and said second direction of rotation (D2) is opposite to said first direction of rotation (Dl).

2. The braking system (200) for the motor vehicle (100) as claimed in claim 1, wherein said first brake lever (205) and said second brake lever (210) are supported by a master cylinder assembly, said master cylinder assembly includes a fluid dispensing member (215) and a holder member (220), and said master cylinder assembly enables securing said fluid dispensing member (215) to a handle bar (H) of said motor vehicle (100).

3. The braking system (200) for the motor vehicle (100) as claimed in claim 1 or 2, wherein said first brake lever (205) is an independent brake lever capable of actuating said at least one front wheel brake (120), and said second brake lever (210) is functionally connected to a synchronous brake lever (230), said synchronous brake lever (230) capable of actuating at least one wheel brake (120, 125).

4. The braking system (200) for the motor vehicle (100) as claimed in claim 1 or claim 2, wherein said first brake lever (205) includes a first dynamic abutment point (209) affixed thereto, said second brake lever (210) includes a second dynamic abutment point (213) affixed thereto, and said elastic member (240) secured to said first dynamic abutment point (209) and said second dynamic abutment point (213).

5. The braking system (200) for the motor vehicle (100) as claimed in claim 1, wherein said elastic member (240) is disposed in a travel planar region about which said first brake lever (205) and said second brake lever (210) are moving.

6. The braking system (200) for the motor vehicle (100) as claimed in claim 1 or claim 2, wherein said elastic member (240) is disposed at a triangular portion (T), said triangular portion (T) being defined by an outer periphery of said first brake lever (205) and a handlebar (H).

7. The braking system (200) for the motor vehicle (100) as claimed in claim 1, wherein said first brake lever (205) is provided with a first dynamic abutment point (209) at a downward face thereof and said second brake lever (210) is provided with a second dynamic abutment point (213), said second dynamic abutment point (213) being provided at a substantial mid-portion along a height of the second brake lever (210).

8. The braking system (200) for the motor vehicle (100) as claimed in claim 2, wherein said first pivot point (Pl) is disposed towards one side of a piston axis (P-P') of an actuation member (217) of said master cylinder assembly, and said second pivot point (P2) is disposed towards another side of said piston axis (P-P').

9. The braking system (200) for the motor vehicle (100) as claimed in claim 4, wherein at least one of said first dynamic abutment point (209) and said second dynamic abutment point (213) is movable upon actuation of at least one of said first brake lever (205) and said second brake lever (210).

10. The braking system (200) for the motor vehicle (100) as claimed in claim 1, wherein said first brake lever (205) and said second brake lever (210) are capable of actuating an actuation member (217) by at least one of said first brake lever (205) and said second brake lever (210) or by actuation of said second brake lever (210) through said first brake lever (205).

11. The braking system (200) for the motor vehicle (100) as claimed in claim 1, wherein said first brake lever (205) comprises an extended portion (251), said extended portion (251) being extending from the pivot point (Pl) thereof.

12. The braking system (200) for the motor vehicle (100) as claimed in claim 11, wherein said first brake lever (205) includes a lever arm (206) capable of actuating said actuation member (217) of a fluid dispending member (215) of said braking system (200).

## Patentansprüche

1. Ein Bremssystem (200) für ein Kraftfahrzeug (100), wobei das Bremssystem (200) Folgendes umfasst:
mindestens eine Vorderradbremse (120), wobei die Vorderradbremse (120) in der Lage ist, Bremskräfte auf mindestens ein Vorderrad (110) des Kraftfahrzeugs (100) auszuüben;
mindestens eine Hinterradbremse (125), wobei die Hinterradbremse (125) in der Lage ist, Bremskräfte auf mindestens ein Hinterrad (115) des Kraftfahrzeugs (100) auszuüben;
einen ersten Bremshebel (205), wobei der erste Bremshebel (205) um einen ersten Drehpunkt (Pl) drehbar ist;
einen zweiten Bremshebel (210), wobei der zweite Bremshebel (210) um einen zweiten Drehpunkt (P2) drehbar ist; und
ein einzelnes elastisches Element (240), wobei das einzelne elastische Element (240) funktionsfähig mit dem ersten Bremshebel (205) und dem zweiten Bremshebel (210) verbunden ist,
**dadurch gekennzeichnet, dass** das einzelne elastische Element (240) in der Lage ist, eine Rückstellkraft bei Betätigung des ersten Bremshebels (205) und des zweiten Bremshebels (210) bereitzustellen, und
wobei der erste Bremshebel (205) um den ersten Drehpunkt (Pl) in einer ersten Drehrichtung (Dl) drehbar ist und der zweite Bremshebel (210) um den zweiten Drehpunkt (P2) in einer zweiten Drehrichtung (D2) drehbar ist, und die zweite Drehrichtung (D2) der ersten Drehrichtung (Dl) entgegengesetzt ist.

2. Bremssystem (200) für das Kraftfahrzeug (100) nach Anspruch 1, wobei der erste Bremshebel (205) und der zweite Bremshebel (210) von einer Hauptzylinderbaugruppe getragen werden, wobei die Hauptzylinderbaugruppe ein Flüssigkeitsabgabeelement (215) und ein Halteelement (220) umfasst, und wobei die Hauptzylinderbaugruppe die Befestigung des Flüssigkeitsabgabeelements (215) an einer Lenkstange (H) des Kraftfahrzeugs (100) ermöglicht.

3. Bremssystem (200) für das Kraftfahrzeug (100) nach Anspruch 1 oder 2, wobei der erste Bremshebel (205) ein unabhängiger Bremshebel ist, der in der Lage ist, die mindestens eine Vorderradbremse (120) zu betätigen, und der zweite Bremshebel (210) funktionell mit einem Synchronbremshebel (230) verbunden ist, wobei der Synchronbremshebel (230) in der Lage ist, mindestens eine Radbremse (120, 125) zu betätigen.

4. Bremssystem (200) für das Kraftfahrzeug (100) nach Anspruch 1 oder Anspruch 2, wobei der erste Bremshebel (205) einen ersten dynamischen Anschlagpunkt (209) aufweist, der daran befestigt ist, der zweite Bremshebel (210) einen zweiten dynamischen Anschlagpunkt (213) aufweist, der daran befestigt ist, und das elastische Element (240) an dem ersten dynamischen Anschlagpunkt (209) und dem zweiten dynamischen Anschlagpunkt (213) befestigt ist.

5. Bremssystem (200) für das Kraftfahrzeug (100) nach Anspruch 1, wobei das elastische Element (240) in einem ebenen Bewegungsbereich angeordnet ist, um den sich der erste Bremshebel (205) und der zweite Bremshebel (210) bewegen.

6. Bremssystem (200) für das Kraftfahrzeug (100) nach Anspruch 1 oder Anspruch 2, wobei das elastische Element (240) an einem dreieckigen Abschnitt (T) angeordnet ist, wobei der dreieckige Abschnitt (T) durch einen Außenumfang des ersten Bremshebels (205) und eine Lenkstange (H) definiert ist.

7. Bremssystem (200) für das Kraftfahrzeug (100) nach Anspruch 1, wobei der erste Bremshebel (205) mit einem ersten dynamischen Anschlagpunkt (209) an einer nach unten gerichteten Fläche desselben versehen ist und der zweite Bremshebel (210) mit einem zweiten dynamischen Anschlagpunkt (213) versehen ist, wobei der zweite dynamische Anschlagpunkt (213) in einem im Wesentlichen mittleren Bereich entlang einer Höhe des zweiten Bremshebels (210) vorgesehen ist.

8. Bremssystem (200) für das Kraftfahrzeug (100) nach Anspruch 2, wobei der erste Drehpunkt (Pl) in Richtung einer Seite einer Kolbenachse (P-P') eines Betätigungselements (217) der Hauptzylinderanordnung angeordnet ist und der zweite Drehpunkt (P2) in Richtung einer anderen Seite der Kolbenachse (P-P') angeordnet ist.

9. Bremssystem (200) für das Kraftfahrzeug (100) nach Anspruch 4, wobei mindestens einer von dem ersten dynamischen Anschlagpunkt (209) und dem zweiten dynamischen Anschlagpunkt (213) bei Betätigung von mindestens einem von dem ersten Bremshebel (205) und dem zweiten Bremshebel (210) beweglich ist.

10. Bremssystem (200) für das Kraftfahrzeug (100) nach Anspruch 1, wobei der erste Bremshebel (205) und der zweite Bremshebel (210) in der Lage sind, ein Betätigungselement (217) durch den ersten Bremshebel (205) und/oder den zweiten Bremshebel (210) oder durch Betätigung des zweiten Bremshebels (210) durch den ersten Bremshebel (205) zu betätigen.

11. Bremssystem (200) für das Kraftfahrzeug (100) nach Anspruch 1, wobei der erste Bremshebel (205) einen verlängerten Abschnitt (251) umfasst, wobei sich der verlängerte Abschnitt (251) von seinem Drehpunkt (Pl) aus erstreckt.

12. Bremssystem (200) für das Kraftfahrzeug (100) nach Anspruch 11, wobei der erste Bremshebel (205) einen Hebelarm (206) aufweist, der in der Lage ist, das Betätigungselement (217) eines Fluidabgabeelements (215) des Bremssystems (200) zu betätigen.

## Revendications

1. Système de freinage (200) pour un véhicule à moteur (100), ledit système de freinage (200) comprenant :
au moins un frein de roue avant (120), ledit frein de roue avant (120) étant capable d'appliquer des forces de freinage à au moins une roue avant (110) dudit véhicule automobile (100) ;
au moins un frein de roue arrière (125), ledit frein de roue arrière (125) étant capable d'appliquer des forces de freinage à au moins une roue arrière (115) dudit véhicule à moteur (100) ;
un premier levier de frein (205), ledit premier levier de frein (205) étant rotatif autour d'un premier point de pivot (Pl) ;
un deuxième levier de frein (210), ledit deuxième levier de frein (210) pouvant tourner autour d'un deuxième point de pivot (P2) ; et
un élément élastique unique (240), ledit élément élastique unique (240) étant couplé de manière opérationnelle audit premier levier de frein (205) et audit second levier de frein (210),
**caractérisé par le fait que** ledit élément élastique unique (240) est capable de fournir une force de rappel lors de l'actionnement dudit premier levier de frein (205) et dudit second levier de frein (210), et
dans lequel ledit premier levier de frein (205) peut tourner autour dudit premier point de pivot (Pl) dans un premier sens de rotation (Dl) et ledit second levier de frein (210) peut tourner autour dudit second point de pivot (P2) dans un second sens de rotation (D2), et ledit second sens de rotation (D2) est opposé audit premier sens de rotation (Dl).

2. Système de freinage (200) pour le véhicule automobile (100) selon la revendication 1, dans lequel ledit premier levier de frein (205) et ledit second levier de frein (210) sont supportés par un ensemble maître-cylindre, ledit ensemble maître-cylindre comprend un élément de distribution de fluide (215) et un élément de support (220), et ledit ensemble maître-cylindre permet de fixer ledit élément de distribution de fluide (215) à un guidon (H) dudit véhicule automobile (100).

3. Système de freinage (200) pour le véhicule automobile (100) selon la revendication 1 ou 2, dans lequel ledit premier levier de frein (205) est un levier de frein indépendant capable d'actionner ledit au moins un frein de roue avant (120), et ledit second levier de frein (210) est fonctionnellement connecté à un levier de frein synchrone (230), ledit levier de frein synchrone (230) étant capable d'actionner au moins un frein de roue (120, 125).

4. Système de freinage (200) pour le véhicule automobile (100) selon la revendication 1 ou la revendication 2, dans lequel ledit premier levier de frein (205) comprend un premier point de butée dynamique (209) qui y est fixé, ledit second levier de frein (210) comprend un second point de butée dynamique (213) qui y est fixé, et ledit élément élastique (240) fixé audit premier point de butée dynamique (209) et audit second point de butée dynamique (213).

5. Système de freinage (200) pour le véhicule automobile (100) selon la revendication 1, dans lequel ledit élément élastique (240) est disposé dans une région planaire de déplacement autour de laquelle ledit premier levier de frein (205) et ledit second levier de frein (210) se déplacent.

6. Système de freinage (200) pour le véhicule automobile (100) selon la revendication 1 ou la revendication 2, dans lequel ledit élément élastique (240) est disposé au niveau d'une portion triangulaire (T), ladite portion triangulaire (T) étant définie par une périphérie extérieure dudit premier levier de frein (205) et un guidon (H).

7. Système de freinage (200) pour le véhicule automobile (100) selon la revendication 1, dans lequel ledit premier levier de frein (205) est pourvu d'un premier point de butée dynamique (209) sur sa face inférieure et ledit second levier de frein (210) est pourvu d'un second point de butée dynamique (213), ledit second point de butée dynamique (213) étant situé à peu près à miparcours sur la hauteur du second levier de frein (210).

8. Système de freinage (200) pour le véhicule automobile (100) selon la revendication 2, dans lequel ledit premier point de pivotement (Pl) est disposé vers un côté de l'axe du piston (P-P') d'un élément d'actionnement (217) de l'ensemble maître-cylindre, et ledit second point de pivotement (P2) est disposé vers un autre côté de l'axe du piston (P-P').

9. Système de freinage (200) pour le véhicule automobile (100) selon la revendication 4, dans lequel au moins un desdits premier point de butée dynamique (209) et second point de butée dynamique (213) est mobile lors de l'actionnement d'au moins un desdits premier levier de frein (205) et second levier de frein (210).

10. Système de freinage (200) pour le véhicule automobile (100) selon la revendication 1, dans lequel ledit premier levier de frein (205) et ledit second levier de frein (210) sont capables d'actionner un organe d'actionnement (217) par au moins l'un dudit premier levier de frein (205) et dudit second levier de frein (210) ou par l'actionnement dudit second levier de frein (210) par l'intermédiaire dudit premier levier de frein (205).

11. Système de freinage (200) pour le véhicule automobile (100) selon la revendication 1, dans lequel ledit premier levier de frein (205) comprend une partie étendue (251), ladite partie étendue (251) s'étendant à partir de son point de pivotement (Pl).

12. Système de freinage (200) pour le véhicule automobile (100) selon la revendication 11, dans lequel ledit premier levier de frein (205) comprend un bras de levier (206) capable d'actionner ledit organe d'actionnement (217) d'un organe de distribution de fluide (215) dudit système de freinage (200).
